Europäisches Patentamt

European Patent Office

Office européen des brevets

(19)

(11) Publication number: **0 125 834**

**A2**

## (12) EUROPEAN PATENT APPLICATION

(21) Application number: 84302945.5

(22) Date of filing: 02.05.84

(51) Int. Cl.³: **H 02 K 9/06**

(30) Priority: 11.05.83 GB 8312963

(43) Date of publication of application:
21.11.84 Bulletin 84/47

(84) Designated Contracting States:
DE FR GB IT

(71) Applicant: LUCAS INDUSTRIES public limited company
Great King Street
Birmingham, B19 2XF(GB)

(72) Inventor: Allport, Maurice James
31 Hampshire Drive
Edgbaston Birmingham, B15 3NY(GB)

(74) Representative: Carpenter, David et al,
Marks & Clerk Alpha Tower Suffolk Street Queensway
Birmingham B1 1TT(GB)

(54) Alternators.

(57) An alternator including a frame (11) supporting the stator windings (13) of the alternator, a rotor shaft (14) journalled for rotation about the axis of the stator windings (13), a rotor (15) carried by the rotor shaft, rectifier assembly (16) including semi-conductor devices (17) mounted on a heat sink member (16b), and a fan (22) carried by the rotor shaft (14) for rotation therewith, said heat sink member (16) of the full-wave rectifier defining part of a wall of a chamber within which the fan (22) is rotatable.

Fig.4.

EP 0 125 834 A2

This invention relates to internal combustion engine driven alternators, particularly but not exclusively as used in road vehicles.

It is known to mount a semi-conductor, full-wave, three-phase rectifier, and a semi-conductor voltage regulator on the frame of an alternator so that heat generated by the semi-conductor devices, primarily the diodes of the rectifier, is dissipated by the heat sink mounting member of the semi-conductor device and the frame of the alternator. It is also known to provide the alternator with a fan mounted upon the rotor shaft of the alternator at its end remote from the rectifier and regulator and rotating with the shaft to draw air through the alternator casing to cool the stator windings and the semi-conductor devices of the alternator.

It is of course desirable to optimise the power output of an alternator, and in achieving the optimum power output the operating temperatures of the semi-conductor devices of the rectifier and regulator are known to be a limiting factor. Semi-conductor devices have a defined maximum operating temperature which must not be exceeded if reliable operation is to be achieved. It follows therefore that in achieving optimum power output the working temperature of the semi-conductor devices of the rectifier and regulator should not exceed, and desirably should be maintained as much as possible below their predefined maxima.

In a known alternator the rectifier includes positive and negative heat sink plates upon which the semi-conductor devices of the rectifier are mounted. The heat sink plates are formed from copper or aluminium and thus have good thermal conductivity.

The regulator semi-conductor devices are similarly mounted on at least one heat sink plate.

Moreover, the heat sink plates of the rectifier and regulator are in thermal connection with part of the frame of the alternator known as the alternator end bracket. Thus the end bracket increases the effective surface area of the heat sinks. The alternator is provided at its end remote from the rectifier and regulator with an internal fan mounted upon the alternator rotor shaft so as to rotate therewith. The fan draws air through the casing of the alternator primarily to cool the stator windings of the alternator but as the major constraint upon the power output of the known alternator is the operating temperature of the semi-conductor devices of the rectifier and to a lesser extent the regulator, the known alternator is provided with a second fan also rotating with the rotor shaft. The second fan is positioned within the casing of the alternator to draw cooling air generally through the region of the casing housing the regulator and rectifier. The use of such a second internal fan is seen to increase the air flow in the region of the rectifier and regulator by comparison with a single external or internal fan arrangement, but it is an object of the present invention to provide an alternator wherein the heat dissipation from the semi-conductor devices is improved by comparison with known arrangements.

An alternator according to the invention comprises a frame supporting the stator windings of the alternator, a rotor shaft journalled for rotation about the axis of the stator windings, a rotor carried by the rotor shaft, a rectifier assembly including semi-conductor devices mounted on a heat sink member, and a fan
carried by the rotor shaft for rotation therewith, said
heat sink member of said rectifier assembly forming
part of a wall of a chamber within which the fan is
rotatable.

Preferably said rectifier assembly is a three phase,
full wave rectifier and includes a further heat sink
member carrying further semi-conductor devices, one of
said heat sink members being the positive member of the
rectifier and the other heat sink member being the
negative member of the rectifier.

Desirably said heat sink members are in facial contact.

Alternatively said heat sink members are generally
co-planar and each defines part of a wall of said
chamber.

Preferably said fan and air inlets through which
cooling air is drawn by said fan are so positioned in
relation to said rectifier assembly that cooling air
flows over both the front and rear faces of the
rectifier assembly.

Preferably said fan is a centrifugal fan and said heat
sink member is generally planar, said fan rotating in a
plane parallel to the plane of said heat sink member.

Desirably said alternator includes a further fan
carried by and rotatable with said rotor shaft, said
further fan also generating a cooling air flow into the
alternator.

Desirably there is further provided a voltage regulator
including semi-conductor devices and a heat sink member, and the heat sink member of said voltage
regulator also forms part of the wall of said chamber.

Preferably the or each heat sink member extends
parallel to the air flow of the first-mentioned fan but
includes a portion or portions which project into the
air flow.

One example of the invention is illustrated in the
accompanying drawings, wherein:

Figure 1 is a diagrammatic sectional view of an
alternator;
Figure 2 is a fragmentary view of a first modification
of the arrangement shown in Figure 1;
Figure 3 is a view similar to Figure 2 of a second
modification; and
Figure 4 is a view similar to Figures 2 and 3 of a
further modification.

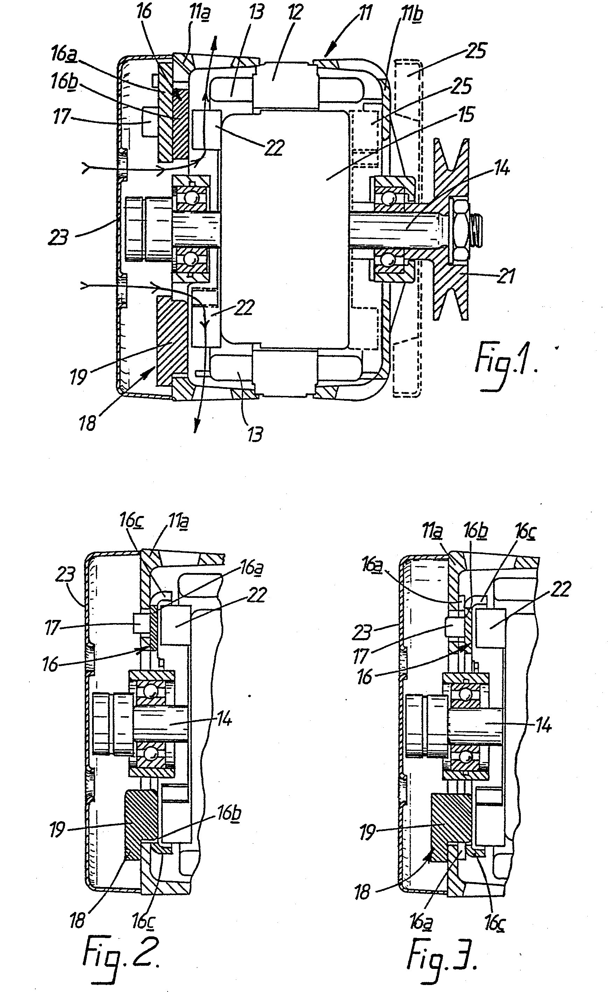

Referring first to Figure 1 of the drawings, the
alternator includes a frame generally indicated at 11
which can be thought of as comprising first and second
cast aluminium end brackets 11a, 11b and the annular
stator lamination pack 12 which supports the stator
windings 13 of the alternator. Each of the end brackets
11a, 11b carries a bearing assembly, the bearing
assemblies being axially aligned and rotatably
supporting a rotor shaft 14. The axis of the rotor
shaft 14 and the axis of the stator assembly 12, 13 are
coincident. Mounted on the rotor shaft 14 is the rotor
15 of the alternator which is of conventional form.
Rotation of the rotor shaft 14 rotates the rotor 15
within the stator assembly 12, 13 thus generating a
three-phase alternating current in the three-phase
stator winding 13.

Secured to the end bracket 11a and extending part-way
around the rotor shaft 14 is an arcuate three-phase,
full-wave rectifier assembly 16 of generally
conventional form. The semi-conductor diodes 17 of the
rectifier assembly are arranged in two sets, a positive
set and a negative set, the diodes of each set being in
heat exchange relationship and electrical connection
with a respective arcuate heat sink plate 16b, 16a. The
diodes 17 are electrically connected to the stator
winding 13 in known manner. The arcuate negative and
positive heat sink plates 16a, 16b are mounted in
facial contact and are thus in heat exchange
relationship but are electrically insulated from each
other, the plate 16a having apertures therein through
which the diodes 17 of the plate 16b and their external
electrical connections extend. The plate 16a engages
the end bracket 11a and so both plates are thermally
connected to the end bracket 11a but only negative
plate 16a is electrically connected thereto. Thus heat
generated in the semi-conductor diodes 17 during
operation of the alternator is dissipated by way of the
heat sink plates 16a, 16b and end bracket 11a. Also
secured to the end bracket 11a in heat exchange
relationship therewith is the heat sink 19 of a voltage
regulator 18. The voltage regulator 18 is again of
conventional form.

At its end remote from the end bracket 11a the rotor
shaft 14 carries a conventional drive pulley 21 whereby
the rotor shaft 14 and rotor 15 are driven. Positioned
within the alternator between the rotor 15 and the end
bracket 11a and secured to the rotor shaft 14 is a
centrifugal fan 22. The centrifugal fan 22 is of known
form, comprising a metal disc having blades at its
periphery. The fan rotates in very close proximity to
the heat sink plates 16a and 19 and generates a flow of cooling air from the exterior of the alternator, which flow of air passes inwardly through apertures in a cover 23 secured to the end bracket 11a, and axially adjacent the end of the shaft 14 remote from the pulley 21 to pass through apertures around the bearing assembly of the end bracket 11a. Thereafter the cooling air flows radially through the fan 22 and thus passing over the exposed surfaces of the heat sink plate 16b, 19. Thereafter the air flow passes across one axial end of the stator winding 13 and exits from the alternator by way of apertures in the end bracket 11. It will be recognised therefore that the heat sink plates 16b, 19 form parts of the wall of a chamber within which the fan 22 rotates and through which cooling air is driven by the fan 22, the plates 16b, 19 being parallel to the plane of rotation of the fan 22 and being presented to the fan without any intervening components.

The flow of cooling air generated by the fan 22 improves the dissipation of the heat generated by the diodes 17 and the semi-conductor devices of the regulator and thus enables the rectifier and regulator to handle higher power outputs.

In addition to the fan 22 the alternator preferably includes a further fan 25 in a more conventional location. It can be seen (broken lines) that the fan 25 can be positioned internally between the rotor 15 and the end bracket 11b to direct cooling air over the corresponding axial overhang of the winding 13, or alternatively the fan 25 could be positioned externally between the pulley 21 and the end bracket 11b again to generate an air flow around the corresponding axial end overhang of the winding 13. It will be understood that this latter position of the fan 25 is the normal position for the fan of an alternator, and indeed it is usual to find alternators with only a single fan in their construction, this single fan being positioned between the pulley and the end bracket 11b.

In the modification illustrated in Figure 2 the two heat sink plates 16a, 16b are positioned end to end in a common plane transverse to the rotor shaft axis and are both in thermal contact with the end bracket 11a. Again only the plate 16a is electrically connected to the end bracket 11a. Both plates 16a, 16b are presented to the fan 22 and both define parts of the wall of the fan chamber. The cooling action on the heat sink plates 16a, 16b of the air flow generated by the fan 22 is enhanced by providing an integral upstanding flange 16c at the periphery of the plates 16a, 16b. The flange 16c of each plate is formed with a series of apertures, and thus constitutes a castellated arrangement at the periphery of the plate, the castellations projecting into the air flow of the fan 22.

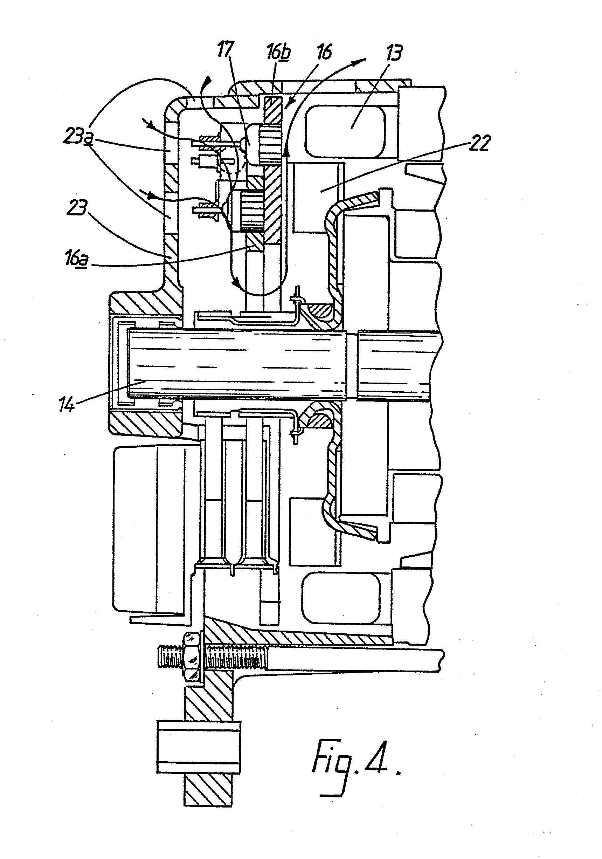

The arrangement illustrated in Figure 3 is similar to that of Figure 1 in that the heat sink plates 16a, 16b are in facial contact but are electrically insulated from each other. The plate 16a is electrically connected to the end bracket 11a, and both plates are thermally connected thereto, the plate 16a by contact with the end bracket 11a and the plate 16b by way of the plate 16a. Thus the heat sink plate 16b is electrically isolated from the end bracket 11a while nevertheless remaining in heat exchange relationship therewith and is provided with a flange 16c as described with reference to Figure 2.

Figure 4 illustrates a modification embodying a preferred air flow path which is applicable, with advantage, to the arrangements shown in Figures 1 to 3. It can be seen that the air inlet apertures 23a in the cover 23 are so positioned that the flow of cooling air generated by the fan 22 flows radially towards the axis of the shaft 14 passing over that face of the rectifier assembly 16, which is presented to the cover 23. The airflow then turns through 180° passing between the rectifier assembly 16 and the rotor shaft 14, to flow over the reverse face of the rectifier assembly before exiting from the alternator as described above with reference to Figures 1 to 3. Thus cooling air flows over both front and rear faces of the rectifier assembly 16.

The construction shown in Figure 4 although similar to those of Figures 1 and 3 differs therefrom in a number of respects which are not critical to an understanding of the invention, for example, the cover 23 constitutes an equivalent of the end bracket 11a in that it carries a bearing for the shaft 14 and in that the rectifier assembly and regulator heat sink plates are in heat exchange relationship therewith. The rectifier assembly includes a pair of arcuate heat sink plates 16a, 16b, the plate 16a being a positive plate and the plate 16b being a negative plate. The plates 16a, 16b carry respective positive and negative sets of diodes 17 and are in facial contact, thus effectively constituting a single plate for heat sink purposes. Again, as in Figures 1 and 3 the two plates are electrically insulated from one another by an electrically insulating surface layer of one or both plates or by an intervening insulator. Only the negative plate 16 is in contact with the cover 23 and so the positive plate transfers heat to the cover 23 by way of the negative plate.

The exact optimum positioning of the inlet apertures 23a and the outlet apertures may be determined initially by experiment but it is envisaged that grouping inlet apertures 23a adjacent diodes 17 may be advantageous. It is of course desirable to ensure that inlet apertures are not sufficiently close to outlet apertures for warm air issuing from the outlet apertures to be drawn back into the inlet apertures.

In the constructions of Figures 1, 3 and 4 where the plates 16a, 16b, are in facial contact, an electrically insulating surface coating or a layer or sheet of electrically insulating material can be used to isolate the plates electrically without isolating them thermally. As an alternative the plates 16a, 16b could be held parallel but spaced apart by electrically insulating spacers. However in such an arrangement thermal conduction from one plate via the other plate to the end bracket would be restricted, although some cooling would be achieved by air circulation between the plates.

It will be recognised that in order to operate efficiently it is desirable that the blades of a centrifugal fan, such as fan 22, rotate in an axially confined space. In all of the examples contemplated above this desideratum is fulfilled since the blades of fan 22 rotate in a space defined between the disc of the fan 22 and the heat sink plate or plates of the rectifier of the alternator.

0125834

CLAIMS:

1.    An alternator including a frame (11) supporting the stator windings (13) of the alternator, a rotor shaft (14) journalled for rotation about the axis of the stator windings (13), a rotor (15) carried by the rotor shaft, a rectifier assembly (16) including semi-conductor devices (17) mounted on a heat sink member and a fan (22) carried by the rotor shaft (14) for rotation therewith, characterised in that said heat sink member (16b) of the rectifier assembly (16) defines part of a wall of a chamber within which the fan (22) is rotatable.

2.    An alternator as claimed in claim 1 characterized in that said rectifier assembly (16) is a three phase, full wave rectifier and includes a further heat sink member (16a) carrying further semi-conductor devices (17), one of said heat sink members being electrically the positive member of the assembly while the other heat sink member is the negative member of the assembly.

3.    An alternator as claimed in claim 2 characterized in that said heat sink members (16a, 16b) are in facial contact.

4.    An alternator as claimed in claim 2, characterized in that said heat sink members (16a, 16b) are generally co-planar and each defines part of a wall of said chamber.

5.    An alternator as claimed in any one of claims 1 to 4, characterized in that said fan (22) and air inlets 23a through which air is drawn by said fan (22) are so positioned in relation to said rectifier assembly (16, 17) that the cooling air flows over both front and rear faces of the rectifier assembly.

6.    An alternator as claimed in any one of claims 1 to 5 characterized in that said fan (22) is a centrifugal fan and said heat sink member (16) is generally planar, said fan rotating in a plane parallel to the plane of said heat sink member.

7.    An alternator as claimed in any one of claims 1 to 6 characterized in that said alternator includes a further fan (25) carried by and rotatable with said rotor shaft (14), said further fan (25) also generating a cooling air flow into the alternator.

8.    An alternator as claimed in any one of claims 1 to 7 characterized in that there is further provided a voltage regulator including semi-conductor devices and a heat sink member (19), and the heat sink member (19) of said voltage regulator also forms part of the wall of said chamber within which said fan (22) rotates.

9.    An alternator as claimed in any one of claims 1 to 8 characterized in that the or each heat sink member (16, 19) extends parallel to the air flow of the first mentioned fan but includes a portion orportions (16a) which project into the air flow.

10.    An alternator as claimed in any one of claims 1 to 9 characterized in that the or each heat sink member is thermally connected to the frame (11a) of the alternator.

Fig.1.

Fig.2.

Fig.3.

Fig.4.